# EUROPÄISCHE PATENTSCHRIFT

(11) **EP 2 605 686 B1**
(45) Veröffentlichungstag und Bekanntmachung des Hinweises auf die Patenterteilung: **14.01.2015**
(21) Anmeldenummer: 11746477.6
(22) Anmeldetag: 11.08.2011
(51) Int. Cl.: A47B 96/20, A47B 97/00

(54) **MÖBELBAUPLATTE**
FURNITURE PANEL
PANNEAU DE STRUCTURE DE MEUBLE

(30) Priorität: 20.08.2010 DE 202010011638 U
(43) Veröffentlichungstag der Anmeldung: 26.06.2013
(73) Patentinhaber: Rehau AG + Co, 95111 Rehau (DE)
(72) Erfinder: HERRMANN, Jürgen, 95185 Gattendorf (DE); ENGELBRECHT, Thorsten, 95502 Himmelkron (DE); KRÄMER, Uwe, 95111 Rehau (DE)
(86) Internationale Anmeldenummer: PCT/EP2011/004028
(87) Internationale Veröffentlichungsnummer: WO 2012/022445

(56) Entgegenhaltungen:
- WO-A1-2006/100295
- US-A1- 2005 237 732

## Beschreibung

Die Erfindung betrifft eine Möbelbauplatte umfassend wenigstens ein Plattenelement, welches an wenigstens einer Stirnseite wenigstens ein erstes Profilelement, welches stoffschlüssig mit diesem verbunden ist, sowie wenigstens ein zweites Profilelement aufweist.

Möbel, Trennwände oder andere Verkleidungselemente im Innenbereich werden immer mehr dazu genutzt, um elektrische Verbraucher wie Lampen, Computer und dergleichen mit dem notwendigen Strom zu versorgen.

Dazu ist bspw. in der DE 2716941 ein Kastenmöbel, insbesondere ein Schreibtisch beschrieben, dessen Ziel es ist, elektrische Kabel zumindest im Wesentlichen unsichtbar zu verlegen, ohne dass es hierzu aufwändiger Montagearbeiten am Kabel oder am Schreibtisch bedarf.

Dazu wird vorgeschlagen, die vorhandenen Holme eines Schreibtisches als Kabelkanal auszubilden und für die Aufnahme von elektrischen Kabeln einzusetzen.

Insbesondere bei einer nachträglichen Bestückung von Möbeln mit elektrischen Verbrauchern und den dazu erforderlichen Stromzuführungen sind im Inneren der Möbel oder an deren Rückseiten derartige Möglichkeiten durch relativ aufwändige bspw. Fräsungen für die Kabelverlegung bzw. das Einbringen der elektrischen Verbraucher wie beispielsweise Lampen erforderlich.

Derartige Möglichkeiten sind einerseits kostenintensiv und führen andererseits dazu, dass das Design sowie die Nutzung der Möbel entscheidend beeinträchtigt sind.

Die WO 2006/100295 A1 offenbart eine Möbelbauplatte, umfassend wenigstens ein Plattenelement, welches an wenigstens einer Stirnseite wenigstens ein erstes Profilelement, welches stoffschlüssig mit diesem verbunden ist, sowie wenigstens ein zweites Profilelement aufweist. Dieses Profilelement ist dabei als Hohlkammerprofil ausgebildet, wobei die Möbelbauplatte jeweils vier rechtwinklig zueinander angeordnete derartige Profilelemente aufweist.

Die US 2005/237732 offenbart ein Regelbeleuchtungssystem, dass ein senkrechtes Befestigungsschienenpaar und eine Vielzahl waagrechter Ablageplatten beinhaltet, die über Befestigungsklammern mit den Befestigungsschienen verbunden sind. Jede senkrechte Befestigungsschiene verfügt über eine nach außen gerichtete Seitenwand, eine Vorderwand und eine nach innen gerichtete Seitenstufenwand, eine hintere Stufenwand und eine nach innen gerichtete Seitenklammerwand. Jedes Ablagebrett verfügt über ein Schlitzpaar, das sich bis in das Ablagebrett hinein erstreckt, und eine oder mehrere Lichtquellen, die innerhalb des Ablagebretts liegen und für die Beleuchtung sorgen. Die Lichtquelle(n) beinhaltet/n ein Stromleiterpaar, das sich durch die Bohrungen hindurch erstreckt, die durch das Ablagebrett führen, und an dessen Ende sich Kontakte befinden. Jede Metallbefestigungsklammer beinhaltet eine gestreckte waagrechte Zunge, die sich bis zu einem Befestigungsteilbereich erstreckt. Strom fließt durch die Schienen, durch die Klammern und durch die Stromleiter, um die Lichtquelle(n) mit Energie zu versorgen.

Hier setzt die Erfindung ein, die sich die Aufgabe gestellt hat, eine Möbelbauplatte zur Verfügung zu stellen, die die Nachteile des Standes der Technik überwindet, die kostengünstig und wirtschaftlich herstellbar ist, mit der elektrische Verbraucher mit Strom versorgt werden können, ohne nachträglich das Design bzw. die Funktion der Möbel zu beeinflussen.

Erfindungsgemäß wird die Aufgabe durch die Merkmale des Anspruches 1 gelöst. Weitere vorteilhafte Ausgestaltungen sind in den Unteransprüchen beschrieben.

Es konnte überraschend festgestellt werden, dass eine Möbelbauplatte umfassend wenigstens ein Plattenelement, welches an wenigstens einer Stirnseite wenigstens ein erstes Profilelement, welches stoffschlüssig mit diesem verbunden ist, sowie wenigstens ein zweites Profilelement aufweist, sich dadurch auszeichnet, dass das zweite Profilelement in einem an der Stirnseite des Plattenelementes befindlichen ersten Aufnahmeraum angeordnet ist und auf wenigstens einer Seite wenigstens eine Nut aufweist, in der wenigstens ein elektrisch leitfähiges Element angeordnet ist.

Hierdurch ist es erstmals möglich, den erforderlichen elektrischen Strom über die gesamte Breite bzw. über den gesamten Umfang herkömmlicher Möbelbauplatten, sowie auch zwischen verschiedenen Möbelbauplatten bspw. innerhalb eines Möbelstücks, aber auch zwischen verschiedenen bspw. Möbelstücken zur Verfügung zu stellen, ohne das Design der Möbelbauplatte, insbesondere auch das der Profilleiste zu zerstören.

Dabei hat es sich als vorteilhaft herausgestellt, dass das zweite Profilelement kraftschlüssig im ersten Aufnahmeraum angeordnet ist, was insbesondere bei einer automatischen Herstellung von Möbelbauplatten mit Profilleisten wirtschaftlich und kostengünstig möglich ist.

Weiterhin vorteilhaft wird gesehen, dass das zweite Profilelement stoffschlüssig im ersten Aufnahmeraum angeordnet ist, was Vorteile bei der Anbringung von Adaptern sowohl im nicht sichtbaren als auch im sichtbaren Bereich der Möbelbauplatte ermöglicht.

Ein weiterer Vorteil der erfindungsgemäßen Möbelbauplatte besteht darin, dass das erste Profilelement den ersten Aufnahmeraum und die darin angeordnete zweite Profilleiste abdichtend verschließt. Hierdurch kann vorteilhafterweise erreicht werden, dass einerseits die Möglichkeit der Zuführung von elektrischem Strom in der Möbelbauplatte problemlos möglich ist und andererseits das Design der Außenseite des ersten Profilelementes dem Design der Möbelbauplatte problemlos anpassbar ist.

Dabei hat es sich weiterhin als äußerst vorteilhaft herausgestellt, dass das erste Profilelement stoffschlüssig mit dem zweiten Profilelement verbunden ist. Hierdurch ist es möglich, die Stirnseite der Möbelbauplatte durch das stoffschlüssige Einbringen des ersten Profilelementes und des zweiten Profilelementes sowohl zu verstärken, als auch ein ansprechendes Design zu gewährleisten.

Die erfindungsgemäße Möbelbauplatte zeichnet sich weiterhin dadurch aus, dass das erste Profilelement und/oder das zweite Profilelement aus einem polymeren und/oder keramischen und/oder duromeren Material hergestellt sind. Durch die Wahl der Werkstoffe lässt sich einerseits eine kostengünstige und designorientierte Möbelbauplatte zur Verfügung stellen, die andererseits die Möglichkeit der Versorgung von elektrischen Verbrauchern mit elektrischem Strom ermöglicht und die dazu noch ein entsprechend gutes Design aufweist.

Ebenfalls von Vorteil bei der erfindungsgemäßen Möbelbauplatte ist, dass der erste Aufnahmeraum im Querschnitt eine prismatische, dreieckige, runde, halbrunde und dergleichen Kontur aufweist, da hierdurch das Design der ersten Profilleiste der Kontur insbesondere der Stirnseite der Möbelbauplatte problemlos anpassbar ist und dies sowohl eine sichere kraftschlüssige als auch eine stoffschlüssige Verbindung des zweiten Profilelementes gewährleistet.

Es hat sich weiterhin bei der erfindungsgemäßen Möbelbauplatte als sehr zielführend herausgestellt, dass im Eckbereich des Plattenelementes befindliche Aufnahmeräume orthogonal zueinander angeordnet sind. Hierdurch kann erreicht werden, dass die jeweils in den ersten Aufnahmeraum der Stirnseite der Möbelbauplatte eingebrachten zweiten Profilelemente so angeordnet werden können, dass die in der dem Grund des ersten Aufnahmeraums gegenüberliegenden Seite angeordneten elektrisch leitfähigen Elemente ohne zusätzliche Kontaktelemente im Eckbereich verbindbar sind.

Ein weiterer Vorteil der erfindungsgemäßen Möbelbauplatte besteht darin, dass im Eckbereich des Plattenelementes befindliche erste Aufnahmeräume durch einen Radius miteinander verbunden sind. Dies ist insbesondere dann von Vorteil, wenn das zweite Profilelement beispielsweise aus einem polymeren Material hergestellt ist und so nicht in jede Stirnseite einer rechteckigen Möbelbauplatte jeweils ein zweites Profilelement eingebracht werden muss, sondern dass bei dem im Eckbereich eingebrachten Radius die zweite Profilleiste in einem Stück in den ersten Aufnahmeraum der Stirnseite der Möbelbauplatte einbringbar ist.

Ein weiterer Vorteil der erfindungsgemäßen Möbelbauplatte besteht darin, dass das Plattenelement als Holz-, MDF-, HDF- Platte und dergleichen ausgebildet ist. Hierdurch können wirtschaftlich und kostengünstig Möbelbauplatten zur Verfügung gestellt werden, die bei Bedarf entsprechende elektrische Verbraucher mit elektrischem Strom versorgen können.

Es hat sich weiterhin als ebenfalls vorteilhaft bei der erfindungsgemäßen Möbelbauplatte herausgestellt, dass das Plattenelement als sogenannte Leichtbauplatte mit zwei dünnwandigen Decklagen und mindestens einer zwischen den Decklagen angeordneten und mit dieser verbundenen Kernlage ausgebildet ist. Mit diesem Ausführungsbeispiel ist es möglich, erfindungsgemäße Möbelbauplatten zur Verfügung zu stellen, die leicht in ihrem Gewicht sind und die sofort oder später die Möglichkeit besitzen, in die Möbelbauplatte einbringbare elektrische Verbraucher mit elektrischem Strom zu versorgen.

Ein weiterer Vorteil der erfindungsgemäßen Möbelbauplatte besteht darin, dass an wenigstens einer Stirnseite des Plattenelementes ein mit dem ersten Aufnahmeraum in Wirkverbindung stehender zweiter Aufnahmeraum angeordnet ist.

In diesen zweiten Aufnahmeraum lässt sich vorteilhafterweise ein Adapterelement einbringen, über das die Einspeisung des elektrischen Stromes in die erfindungsgemäße Möbelbauplatte realisierbar ist.

Dabei ist das Adapterelement der erfindungsgemäßen Möbelbauplatte so ausgebildet, dass es sowohl zur Einspeisung des elektrischen Stromes in die Möbelbauplatte als auch als Verbindungselement im Eckbereich der Möbelbauplatte dient. Zusätzlich ist es so ausgebildet ist, dass es den im zweiten Profilelement anliegenden elektrischen Strom zu einem in der Ober- bzw. Unterseite der Möbelbauplatte eingebrachten Verbraucher zuführt.

Dabei weist das Adapterelement Kontaktelemente auf, die federnd ausgebildet und die im Allgemeinen voneinander beabstandet angeordnet sind.

Die erfindungsgemäße Möbelbauplatte ermöglicht somit eine Zuführung von elektrischem Strom über die gesamte Seite bzw. den gesamten Umfang, so dass elektrische Verbraucher überall bequem anbringbar sind, ohne dass dabei das Design der Möbelbauplatte bzw. das Design des ersten Profilelementes beeinträchtigt ist.

Ein weiterer Vorteil der erfindungsgemäßen Möbelbauplatte wird darin gesehen, dass das zweite Profilelement eine abstützende Funktion für die Stirnseite der Möbelbauplatte aufweist, insbesondere wenn das Plattenelement als sogenannte Leichtbauplatte ausgebildet ist.

Im Folgenden soll die erfindungsgemäße Möbelbauplatte an diesen nicht einschränkenden Ausführungsbeispielen näher beschrieben werden.

Es zeigen:
- Fig. 1: erfindungsgemäße Möbelbauplatte mit einem ersten und einem zweiten Profilelement
- Fig. 2: weitere erfindungsgemäße Möbelbauplatte mit einem ersten und einem zweiten Profilelement
- Fig. 3: Adapterelement der erfindungsgemäßen Möbelbauplatte.

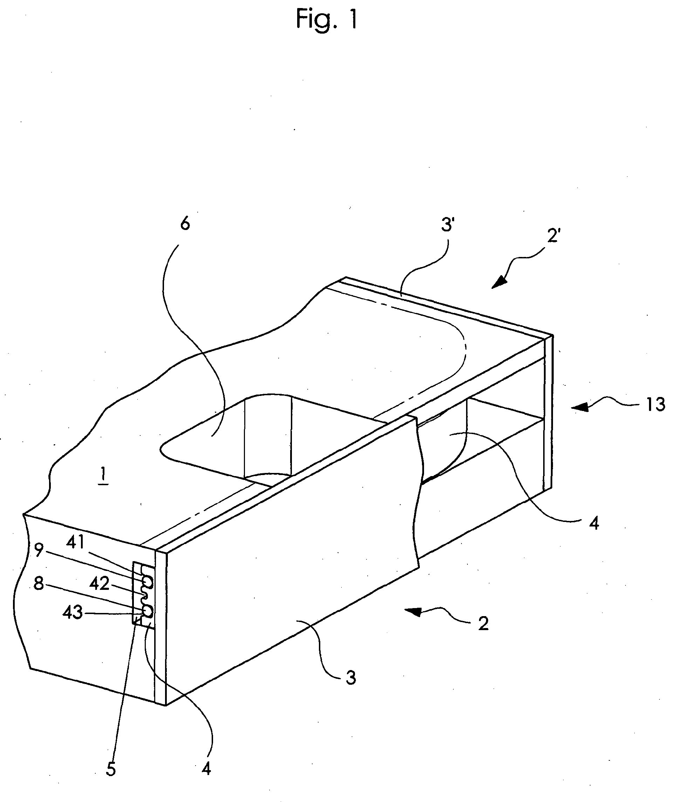

In der Fig. 1 ist eine erfindungsgemäße Möbelbauplatte dargestellt, umfassend ein Plattenelement 1, welches in diesem Ausführungsbeispiel als MDF- Platte ausgebildet ist. Das Plattenelement 1 weist an seiner Stirnseite 2 ein erstes Profilelement 3 auf, welches in etwa die gleiche Breite aufeist wie die Dicke des Plattenelementes 1.

In der Stirnseite 2 des Plattenelementes 1 ist ein erster Aufnahmeraum 5 angeordnet, der in diesem Ausführungsbeispiel eine etwa prismatische Kontur aufweist.

Im ersten Aufnahmeraum 5 der Stirnseite 2 des Plattenelementes 1 ist das zweite Profilelement 4 im Querschnitt erkennbar.

Das zweite Profilelement 4 weist an seiner dem ersten Profilelement 3 abgewandten Seite eine Nut 41, 42, 43 auf, wobei in der Nut 41 ein elektrisch leitfähiges Element 9 und in der Nut 43 ein weiteres elektrisch leitfähiges Element 8 angeordnet ist.

Die Nut 42 des zweiten Profilelementes 4, welche zwischen der Nut 41 und der Nut 43 angeordnet ist, weist kein elektrisch leitfähiges Element auf.

Das zweite Profilelement 4 ist in diesem Ausführungsbeispiel kraftschlüssig im ersten Aufnahmeraum 5 angeordnet, das erste Profilelement 3 ist stoffschlüssig mit dem zweiten Profilelement 4 verbunden und verschließt abdichtend den ersten Aufnahmeraum 5.

Das zweite Profilelement 4 weist in diesem Ausführungsbeispiel in etwa die gleiche Außenkontur auf wie die Innenkontur des ersten Aufnahmeraumes 5.

Es liegt jedoch auch im Rahmen der Erfindung, dass das zweite Profilelement 4 an seinen schmalen Stirnseiten in etwa parallel zur Nut 41, 43 hier nicht dargestellte Befestigungselemente aufweist, die vorteilhafterweise dazu führen, dass das zweite Profilelement 4 kraftschlüssig im ersten Aufnahmeraum 5 fixierbar ist, da sich diese Befestigungselemente, die beispielsweise als Rippen, Stege und dergleichen ausgebildet sein können, in der schmalen Innenwand des ersten Aufnahmeraums 5 fixierend abstützen.

Es liegt auch weiterhin im Rahmen der Erfindung, dass das zweite Profilelement 4 an seinen Schmalseiten in Profilrichtung hier nicht dargestellte Befestigungselemente aus einem weicheren Material aufweist, als der Werkstoff des zweiten Profilelementes 4. Durch diese weicheren Befestigungselemente, welche hier nicht dargestellt sind, lässt sich das zweite Profilelement 4 kraftschlüssig und abdichtend im ersten Aufnahmeraum 5 anordnen. Diese nicht dargestellten Befestigungselemente sind dabei aus beispielsweise elastischen thermoplastischen Materialien hergestellt und können sowohl im an sich bekannten Koextrusionsverfahren zusammen mit dem zweiten Profilelement 4 hergestellt sein oder anschließend stoff- bzw. kraftschlüssig am zweiten Profilelement 4 angebracht werden.

Das elektrisch leitfähige Element 8, 9 ist in diesem Ausführungsbeispiel im Querschnitt rund ausgebildet und besteht beispielsweise aus einem Metall wie Kupfer, Aluminium und dergleichen.

Die Nut 41, 43 des zweiten Profilelementes 2 sind in diesem Ausführungsbeispiel hinterschnittig ausgebildet, so dass das elektrisch leitfähige Element 8, 9 kraftschlüssig in der Nut 41, 43 angeordnet ist.

Es liegt jedoch auch im Rahmen der Erfindung, dass das elektrisch leitfähige Element 8, 9 eine prismatische, halbrunde oder hohle Kontur aufweist und beispielsweise kraftschlüssig durch Verkleben in der Nut 41, 42, 43 anordenbar ist.

Das erste Profilelement 3 und das zweite Profilelement 4 sind in diesem Ausführungsbeispiel aus einem polymeren Material wie beispielsweise Polypropylen, ABS hergestellt, so dass das elektrisch leitfähige Element 8, 9 durch das Material des zweiten Profilelementes 4 elektrisch voneinander isolierend angeordnet ist.

Die erfindungsgemäße Möbelbauplatte weist an einer weiteren Stirnseite 2' des Plattenelementes 1 ein erstes Profilelement 3' auf, welches orthogonal zum ersten Profilelement 3 angeordnet ist.

Auch an der Stirnseite 2' des Plattenelementes 1 ist ein erster Aufnahmeraum eingebracht, der in dieser Darstellung nicht sichtbar ist.

Dieser erste Aufnahmeraum 5 ist durch eine gestrichelte Linie an der Oberseite des Plattenelementes 1 dargestellt, wobei der erste Aufnahmeraum 5 an der Stirnseite 2 des Plattenelementes 1 mit dem ersten Aufnahmeraum 5 an der Stirnseite 2' des Plattenelementes 1 durch einen Radius verbunden sind. Hierdurch ist es vorteilhafterweise möglich, in den am gesamten Umfang der Stirnseite 2, 2' des Plattenelementes 1 angeordneten ersten Aufnahmeraum 5 nur ein zweites Profilelement 4 einzubringen, da dies an dem im Eckbereich 13 angeordneten Radius problemlos herumgeführt und über den gesamten Umfang im ersten Aufnahmeraum 5 eingebracht werden kann.

Die erfindungsgemäße Möbelbauplatte weist in diesem Ausführungsbeispiel einen an der Stirnseite 2 des Plattenelementes 1 beginnenden zweiten Aufnahmeraum 6 auf, der etwa rechtwinklig zum ersten Aufnahmeraum 5 angeordnet ist. Der erste Aufnahmeraum 5 steht somit in Wirkverbindung mit dem zweiten Aufnahmeraum 6.

In den zweiten Aufnahmeraum 6 kann ein hier nicht dargestelltes Adapterelement 7 eingebracht werden, welches beispielsweise dazu dient, den elektrischen Strom von einer Stromversorgungsquelle zu übertragen auf das elektrisch leitfähige Element 8, 9, welches in der Nut 41, 43 des zweiten Profilelementes 4 angeordnet ist.

Hierdurch ist es möglich, dass die erfindungsgemäße Möbelbauplatte über ihren gesamten Umfang mit elektrischem Strom, beispielsweise im Niedervoltbereich von 12 V, versorgt ist und so an den Stirnseiten 2, 2', aber auch auf der Ober- bzw. der Unterseite des Plattenelementes 1 elektrische Verbraucher anbringbar sind, wie beispielsweise Lampen.

Es liegt jedoch auch im Rahmen der Erfindung, dass mit Hilfe von metallischen Kontaktelementen, welche durch das erste Profilelement 3 in die Nut 41, 43 des zweiten Profilelementes 4 einbringbar sind, der elektrische Strom auch an die Außenseite des ersten Profilelementes 3 transportierbar ist.

Die erfindungsgemäße Möbelbauplatte ermöglicht somit über den gesamten Umfang eine flexible Positionierung von Stromabnehmern, die über geeignete multivalente Adapterelemente 7, 7' kontaktierbar sind, ohne dass dabei das Design des Plattenelemente 1 bzw. des ersten Profilelementes 3 zerstört ist.

Ein weiterer Vorteil der erfindungsgemäßen Möbelbauplatte besteht darin, dass das im ersten Aufnahmeraum 5 positionierte zweite Profilelement 4 bspw. aus einem keramischen oder aus einem recycelten Material herstellbar ist und durch ein im Design des Plattenelementes 1 gestaltetes erstes Profilelement 3 abdichtend abdeckbar ist.

Somit kann mit der erfindungsgemäßen Möbelbauplatte ein dem Design des Plattenelementes 1 angepasstes Design des ersten Profilelementes 3 zugeordnet werden. Die erfindungsgemäße Möbelbauplatte unterscheidet sich somit in ihrem Design nicht von einer konventionellen Möbelbauplatte.

Die erfindungsgemäße Möbelbauplatte kann somit auch auf allen bestehenden Maschinen hergestellt bzw. weiterverarbeitet werden mit dem großen Vorteil, jederzeit an jeder Position elektrische Verbraucher anbringen zu können und diese auch mit Strom zu versorgen.

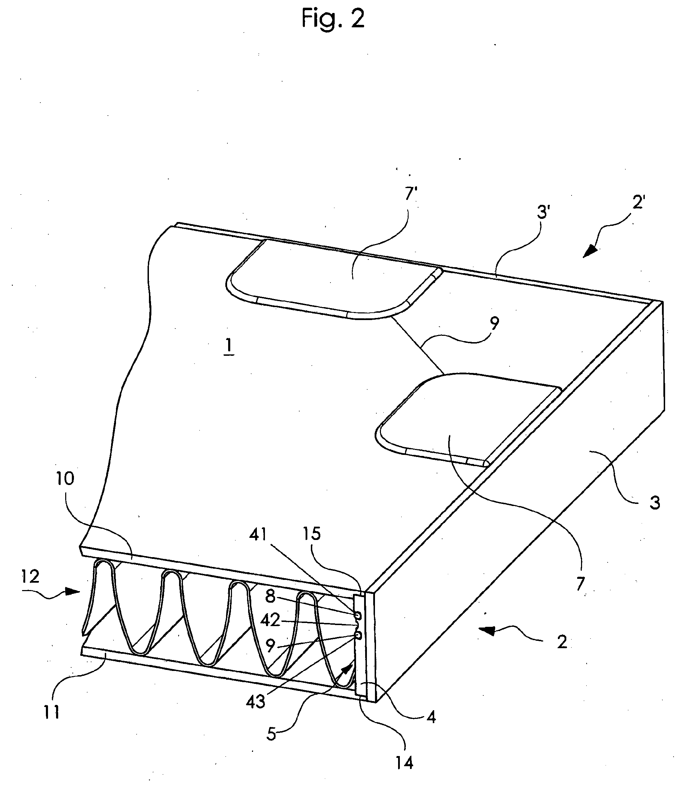

In der Fig. 2 ist eine weitere erfindungsgemäße Möbelbauplatte dargestellt, umfassend wenigstens ein Plattenelement 1, welches in diesem Ausführungsbeispiel als sogenannte Leichtbauplatte mit zwei dünnwandigen Decklagen 10, 11 und mindestens einer zwischen den Decklagen 10, 11 angeordneten und mit dieser verbundenen Kernlage 12 ausgebildet ist.

Das Plattenelement 1 weist an seiner Stirnseite 2 ein erstes Profilelement 3 auf, welches mit den zwei Decklagen 10, 11 stoffschlüssig verbunden ist. Die Stirnseiten der Decklagen 10, 11 weisen in diesem Ausführungsbeispiel eine Nut 14, 15 auf, in der das zweite Profilelement 4 angeordnet ist.

Die Nut 14, 15 in den Decklagen 10, 11 wurde durch eine an sich bekannte Fräsung eingebracht, wobei hier gleichzeitig die Kernlage 12 abgearbeitet wurde und so der erste Aufnahmeraum 5 in der Stirnseite 2 des Plattenelementes 1 eingebracht wurde.

Das zweite Profilelement 4 ist in diesem Ausführungsbeispiel stoffschlüssig in dem ersten Aufnahmeraum 5, der durch die Nuten 14, 15 und die ausgebrachte Kernlage 12 gebildet ist, angeordnet.

An der der Kernlage 12 gegenüber liegenden Seite des zweiten Profilelementes 4 sind Nuten 41, 42, 43 angeordnet.

In der Nut 41 ist das elektrisch leitfähige Element 8 und in der Nut 43 das elektrisch leitfähige Element 9 angeordnet. Das erste Profilelement 3 ist mit dem zweiten Profilelement 4 stoffschlüssig verbunden.

An der Stirnseite 2' des Plattenelementes ist ein weiteres erstes Profilelement 3' angeordnet, welches ebenfalls mit einem hier nicht dargestellten zweiten Profilelement 4 stoffschlüssig verbunden ist.

Die erfindungsgemäße Möbelbauplatte weist an der Oberseite des Plattenelementes 1 zwei Adapterelemente 7, 7' auf, die in dem hier nicht dargestellten zweiten Aufnahmeraum 6 des Plattenelementes 1 angeordnet sind.

Die Adapterelemente 7, 7' sind so ausgebildet, dass sie mit ihren nicht dargestellten Kontaktelementen 71, 72 jeweils am elektrisch leitfähigen Element 8 bzw. beabstandet am elektrisch leitfähigen Element 9 anliegen.

Weiterhin sind die Adapterelemente 7, 7' so ausgebildet, dass sie über ein Positionierelement 74 in der Nut 42 des zweiten Profilelementes 4 anordenbar bzw. fixierbar sind.

Im Eckbereich 13 des Plattenelementes 1 überdeckt das erste Profilelement 3 das weitere erste Profilelement 3'.

Der erste Aufnahmeraum 5 in der Stirnseite 2 für das zweite Profilelement 4 und der erste Aufnahmeraum 5 in der Stirnseite 2' für das nicht dargestellte zweite Profilelement 4 sind im Eckbereich 13 des Plattenelementes 1 orthogonal zueinander angeordnet.

In diesem Ausführungsbeispiel ist das elektrisch leitfähige Element 8, 9 des im Aufnahmeraum 5 der Stirnseite 2 angeordneten zweiten Profilelementes 4 nicht elektrisch mit dem im orthogonalen angeordneten ersten Aufnahmeraum 5 der Stirnseite 2' angeordneten zweiten Profilelement 4 verbunden.

In diesem Ausführungsbeispiel wird die elektrische Verbindung des elektrisch leitfähigen Elementes 8, 9 des zweiten Profilelementes 4 über die in dem Plattenelement 1 angeordneten Adapterelemente 7' realisiert.

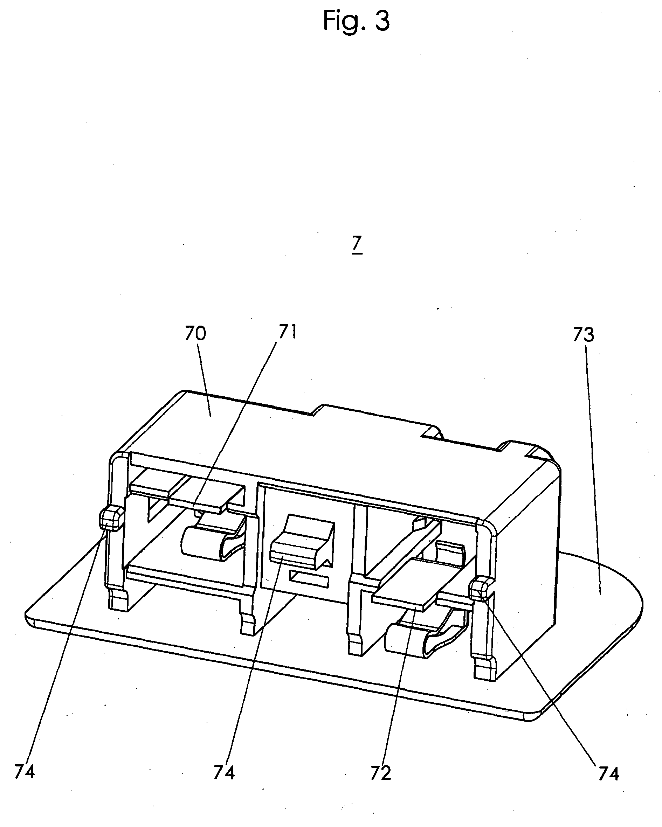

Die in der Fig. 3 dargestellten und in der Fig. 2 nicht sichtbaren Kontaktelemente 71, 72 des Adapterelementes 7, 7' kontaktieren jeweils beabstandet das elektrisch leitfähige Element 8, 9 und übertragen somit den elektrischen Strom, wobei das Adapterelement 7 über eine separate elektrische Verbindung 9 mit dem Adapterelement 7' verbunden ist.

In der Fig. 3 ist ein Adapterelement 7 dargestellt. Dieses Adapterelement 7 weist ein Gehäuse 70 auf, an dessen einer Außenseite die Kontaktelemente 71, 72 angeordnet sind. Die Kontaktelemente 71, 72 sind in diesem Ausführungsbeispiel federnd ausgebildet, was dadurch realisiert ist, dass die Kontaktelemente 71, 72 an der Außenwand des Gehäuses 70 einseitig gelagert sind.

Das Adapterelement 7 ist weiterhin so ausgebildet, dass es zwischen den Kontaktelementen 71,72 ein Positionierelement 74 aufweist. Dieses Positionierelement 74 ist so ausgebildet, dass es im eingebauten Zustand, wenn der Adapter 7 in dem zweiten Aufnahmerahmen 6 eingebracht ist, in direkter Wirkverbindung zur Nut 42 des zweiten Profilelementes 4 steht. Das Positionierelement 74 greift direkt in die Nut 42 des zweiten Profilelementes 4 ein und gewährleistet somit, dass das Kontaktelement 71 des Adapters 7 in elektrischer Wirkverbindung mit dem in der Nut 41 angeordneten elektrisch leitfähigen Element 9 und das Kontaktelement 72 des Adapters 7 mit dem in der Nut 43 angeordneten elektrisch leitfähigen Element 8 tritt. Durch diese mechanische Positionierung über das Positionierelement 74 ist jederzeit eine elektrische Kontaktierung der Kontaktelemente 71,72 mit dem elektrisch leitfähigen Element 8,9 gewährleistet.

Es liegt auch im Rahmen der Erfindung, dass die Kontaktelemente 71, 72 durch in dem Gehäuse 70 angeordnete Spiral- bzw. Schraubenfedern federnd gelagert sind.

Das Gehäuse 70 des Adapterelementes 7 weist weiterhin eine Abdeckung 73 auf, die im eingebauten Zustand den zweiten Aufnahmeraum 6 des Plattenelementes 1 überdeckt, wie in der Fig. 2 dargestellt.

## Patentansprüche

1. Möbelbauplatte umfassend wenigstens ein Plattenelement (1), welches an wenigstens einer Stirnseite (2, 2') wenigstens ein erstes Profilelement (3, 3'), welches stoffschlüssig mit diesem verbunden ist, sowie wenigstens ein zweites Profilelement (4) aufweist, **dadurch gekennzeichnet, dass** das zweite Profilelement (4) in einem an der Stirnseite (2) des Plattenelementes (1) befindlichen ersten Aufnahmeraum (5, 5') angeordnet ist und auf wenigstens einer Seite wenigstens eine Nut (41, 42, 43) aufweist, in der wenigstens ein elektrisch leitfähiges Element (8, 9) angeordnet ist.

2. Möbelbauplatte nach Anspruch 1, **dadurch gekennzeichnet, dass** das zweite Profilelement (4) kraftschlüssig im ersten Aufnahmeraum (5, 5') angeordnet ist.

3. Möbelbauplatte nach Anspruch 1, **dadurch gekennzeichnet, dass** das zweite Profilelement (4) stoffschlüssig im ersten Aufnahmeraum (5, 5') angeordnet ist.

4. Möbelbauplatte nach einem der vorhergehenden Ansprüche, **dadurch gekennzeichnet, dass** das erste Profilelement (3, 3') den ersten Aufnahmeraum (5, 5') abdichtend verschließt.

5. Möbelbauplatte nach einem der vorhergehenden Ansprüche, **dadurch gekennzeichnet, dass** das erste Profilelement (3, 3') stoffschlüssig mit dem zweiten Profilelement (4) verbunden ist.

6. Möbelbauplatte nach einem der vorhergehenden Ansprüche, **dadurch gekennzeichnet, dass** das erste Profilelement (3, 3') und/oder das zweite Profilelement (4) aus einem polymeren und/oder keramischen und/oder duromeren Material hergestellt sind.

7. Möbelbauplatte nach einem der vorhergehenden Ansprüche, **dadurch gekennzeichnet, dass** der erste Aufnahmeraum (5, 5') im Querschnitt eine prismatische, dreieckige, runde, halbrunde und dergleichen Kontur aufweist.

8. Möbelbauplatte nach einem der vorhergehenden Ansprüche, **dadurch gekennzeichnet, dass** im Eckbereich (13) des Plattenelementes (1) befindliche erste Aufnahmeräume (5, 5') orthogonal zueinander angeordnet sind.

9. Möbelbauplatte nach einem der vorhergehenden Ansprüche, **dadurch gekennzeichnet, dass** im Eckbereich (13) des Plattenelementes (1) befindliche erste Aufnahmeräume (5, 5') durch einen Radius miteinander verbunden sind.

10. Möbelbauplatte nach einem der vorhergehenden Ansprüche, **dadurch gekennzeichnet, dass** das Plattenelement (1) als Holz-, MDF-, HDF- Platte und dergleichen ausgebildet ist.

11. Möbelbauplatte nach einem der vorhergehenden Ansprüche, **dadurch gekennzeichnet, dass** das Plattenelement (1) als Leichtbauplatte mit zwei dünnwandigen Decklagen (10, 11) und mindestens einer zwischen den Decklagen (10, 11) angeordneten und mit dieser verbundenen Kernlage (12) ausgebildet ist.

12. Möbelbauplatte nach einem der vorhergehenden Ansprüche, **dadurch gekennzeichnet, dass** an wenigstens einer Seite das Plattenelementes (1) ein mit dem ersten Aufnahmeraum (5) in Wirkverbindung stehender zweiter Aufnahmeraum (6) angeordnet ist.

13. Möbelbauplatte nach Anspruch 12, **dadurch gekennzeichnet, dass** im zweiten Aufnahmeraum (6) ein Adapterelement (7, 7') angeordnet ist.

14. Möbelbauplatte nach Anspruch 13, **dadurch gekennzeichnet, dass** das Adapterelement (7, 7') wenigstens zwei, voneinander beabstandet angeordnete Kontaktelemente (71, 72) aufweist.

15. Möbelbauplatte nach Anspruch 14, **dadurch gekennzeichnet, dass** das Adapterelement (7, 7') wenigstens ein Positionierelement (74) aufweist.

## Claims

1. Furniture-construction panel comprising at least one panel element (1) which, on at least one end side (2, 2'), has at least one first profile element (3, 3'), bonded integrally to the panel element, and at least one second profile element (4), **characterized in that** the second profile element (4) is arranged in a first accommodating space (5, 5') located on the end side (2) of the panel element (1) and, on at least one side, has at least one groove (41, 42, 43), in which at least one electrically conductive element (8, 9) is arranged.

2. Furniture-construction panel according to Claim 1, **characterized in that** the second profile element (4) is arranged in a force-fitting manner in the first accommodating space (5, 5').

3. Furniture-construction panel according to Claim 1, **characterized in that** the second profile element (4) is arranged integrally in the first accommodating space (5, 5').

4. Furniture-construction panel according to one of the preceding claims, **characterized in that** the first profile element (3, 3') closes the first accommodating space (5, 5') with sealing action.

5. Furniture-construction panel according to one of the preceding claims, **characterized in that** the first profile element (3, 3') is bonded integrally to the second profile element (4).

6. Furniture-construction panel according to one of the preceding claims, **characterized in that** the first profile element (3, 3') and/or the second profile element (4) are/is produced from a polymer and/or ceramic and/or thermosetting-polymer material.

7. Furniture-construction panel according to one of the preceding claims, **characterized in that** the first accommodating space (5, 5') has a contour, as seen in cross section, which is prismatic, triangular, round, semicircular or the like.

8. Furniture-construction panel according to one of the preceding claims, **characterized in that** first accommodating spaces (5, 5') located in the corner region (13) of the panel element (1) are arranged orthogonally in relation to one another.

9. Furniture-construction panel according to one of the preceding claims, **characterized in that** first accommodating spaces (5, 5') located in the corner region (13) of the panel element (1) are connected to one another by a radius.

10. Furniture-construction panel according to one of the preceding claims, **characterized in that** the panel element (1) is designed in the form of a panel made of wood, MDF, HDF or the like.

11. Furniture-construction panel according to one of the preceding claims, **characterized in that** the panel element (1) is designed in the form of a lightweight-construction panel with two thin-walled cover layers (10, 11) and at least one core layer (12), which is arranged between the cover layers (10, 11) and is connected thereto.

12. Furniture-construction panel according to one of the preceding claims, **characterized in that** at least one side of the panel element (1) has arranged on it a second accommodating space (6), which is in operative connection with the first accommodating space (5).

13. Furniture-construction panel according to Claim 12, **characterized in that** an adapter element (7, 7') is arranged in the second accommodating space (6).

14. Furniture-construction panel according to Claim 13, **characterized in that** the adapter element (7, 7') has at least two spaced-apart contact elements (71, 72).

15. Furniture-construction panel according to Claim 14, **characterized in that** the adapter element (7, 7') has at least one positioning element (74).

## Revendications

1. Panneau de structure de meuble comprenant au moins un élément de panneau (1), lequel comprend, sur au moins un côté frontal (2, 2'), au moins un premier élément profilé (3, 3') qui est relié à celui-ci par liaison de matière, ainsi qu'au moins un deuxième élément profilé (4), **caractérisé en ce que** le deuxième élément profilé (4) est disposé dans un premier espace de réception (5, 5') se trouvant sur le côté frontal (2) de l'élément de panneau (1) et comprend au moins une rainure (41, 42, 43) sur au moins un côté, dans laquelle rainure est disposé au moins un élément électroconducteur (8, 9).

2. Panneau de structure de meuble selon la revendication 1, **caractérisé en ce que** le deuxième élément profilé (4) est disposé par engagement par force dans le premier espace de réception (5, 5').

3. Panneau de structure de meuble selon la revendication 1, **caractérisé en ce que** le deuxième élément profilé (4) est disposé par liaison de matière dans le premier espace de réception (5, 5').

4. Panneau de structure de meuble selon l'une quelconque des revendications précédentes, **caractérisé en ce que** le premier élément profilé (3, 3') ferme de manière étanche le premier espace de réception (5, 5').

5. Panneau de structure de meuble selon l'une quelconque des revendications précédentes, **caractérisé en ce que** le premier élément profilé (3, 3') est relié par liaison de matière au deuxième élément profilé (4).

6. Panneau de structure de meuble selon l'une quelconque des revendications précédentes, **caractérisé en ce que** le premier élément profilé (3, 3') et/ou le deuxième élément profilé (4) est/sont fabriqué(s) à partir d'un matériau polymère et/ou céramique et/ou duromère.

7. Panneau de structure de meuble selon l'une quelconque des revendications précédentes, **caractérisé en ce que** le premier espace de réception (5, 5') présente, en section transversale, un contour prismatique, triangulaire, circulaire, semi-circulaire et similaire.

8. Panneau de structure de meuble selon l'une quelconque des revendications précédentes, **caractérisé en ce que** des premiers espaces de réception (5, 5') se trouvant dans la région de coin (13) de l'élément de panneau (1) sont disposés orthogonalement l'un à l'autre.

9. Panneau de structure de meuble selon l'une quelconque des revendications précédentes, **caractérisé en ce que** des premiers espaces de réception (5, 5') se trouvant dans la région de coin (13) de l'élément de panneau (1) sont reliés l'un à l'autre par un rayon.

10. Panneau de structure de meuble selon l'une quelconque des revendications précédentes, **caractérisé en ce que** l'élément de panneau (1) est réalisé sous forme de panneau en bois, en MDF, en HDF et similaire.

11. Panneau de structure de meuble selon l'une quelconque des revendications précédentes, **caractérisé en ce que** l'élément de panneau (1) est réalisé sous forme de panneau de structure léger comprenant deux couches de recouvrement (10, 11) à paroi mince et au moins une couche centrale (12) disposée entre les couches de recouvrement (10, 11) et reliée à celles-ci.

12. Panneau de structure de meuble selon l'une quelconque des revendications précédentes, **caractérisé en ce qu'**un deuxième espace de réception (6) en liaison fonctionnelle avec le premier espace de réception (5) est disposé sur au moins un côté de l'élément de panneau (1).

13. Panneau de structure de meuble selon la revendication 12, **caractérisé en ce qu'**un élément adaptateur (7, 7') est disposé dans le deuxième espace de réception (6).

14. Panneau de structure de meuble selon la revendication 13, **caractérisé en ce que** l'élément adaptateur (7, 7') comprend au moins deux éléments de contact (71, 72) disposés à distance l'un de l'autre.

15. Panneau de structure de meuble selon la revendication 14, **caractérisé en ce que** l'élément adaptateur (7, 7') comprend au moins un élément de positionnement (74).
